# EUROPEAN PATENT APPLICATION

(11) **EP 0 841 376 A1**
(43) Date of publication of application: **13.05.1998**
(21) Application number: 97303050.5
(22) Date of filing: 02.05.1997
(51) Int. Cl.: C08L 53/00

(54) **Polyolefin composition for exterior trims**

(30) Priority: 06.11.1996 JP 310087/96
(71) Applicant: Tonen Chemical Corporation, Chuo-Ku Tokyo (JP)
(72) Inventor: Honda, Toshikazu, Chuo-ku, Tokyo (JP); Isoi, Masaaki, Chuo-ku, Tokyo (JP); Saito, Yoshiharu, Chuo-ku, Tokyo (JP); Masubuchi, Naganori, Chuo-ku, Tokyo (JP); Fujita, Yuji, Chuo-ku, Tokyo (JP)
(74) Representative: Calamita, Roberto

(57) **Abstract**

A shaped article for use in exterior trims such as an automotive bumper, which has sufficiently good properties in mechanical strength, stiffness, surface hardness, heat resistance, impact strength as well as a good adhesive strength to a coating film, is made from a polyolefin composition comprising: (a) 50 to 70 parts by weight of a crystalline propylene-ethylene copolymer having an ethylene content of 2 to 30 weight %; (b) 5 to 25 parts by weight of an ethylene-propylene copolymer rubber having a Mooney viscosity ML₁₊₄ of 20 to 70 at 100°C and a propylene content of 22 to 27 weight %; (c) 1 to 25 parts by weight of a very-low-density polyethylene having a density of 0.91 g/cm³ or lower, a melt flow rate of 0.3 to 10 g/10 min determined at 230°C under a load of 2.16 kgf and a melting point of 100°C or higher; and (d) 5 to 25 parts by weight of talc; a total amount of the component (b) and the component (c) being 40 parts by weight or less.

## Description

The present invention relates to a polyolefin composition suitable for producing shaped articles such as exterior automotive trims excellent in mechanical strength, stiffness, surface hardness, heat resistance, impact strength, and adhesive strength to a coating film.

Polypropylene resins have been widely used as a material for exterior automotive trims such as bumpers, etc., because polypropylene resins provide shaped articles of good mechanical strength and are reusable. To attain a mechanical strength required in exterior automotive trims, a polyolefin resin composition mainly comprising a crystalline propylene-ethylene copolymer has been proposed. Although the crystalline propylene-ethylene copolymer is excellent in stiffness, surface hardness and heat resistance, it is poor in impact strength at low temperature as low as -30°C and in adhesive strength to a coating film. To eliminate this problem, it has been proposed to add various elastomers and an inorganic filler.

For example, JP-A-5-59251 discloses a resin composition for an automotive bumper, which comprises (A) 45 to 70 weight % of a highly crystalline propylene-ethylene copolymer, (B) 10 to 20 weight % of an amorphous ethylene-propylene copolymer having an ethylene content of 70 to 90 weight % and a Mooney viscosity ML₁₊₄ (100°C) of 5 to 60, (C) 5 to 15 weight % of an ethylene-α-olefin copolymer containing 5 to 15 mol % α-olefin of 4 to 10 carbon atoms and having a density of 0.91 or less and a melt flow index (230°C) of 2 to 50 g/10 min, (D) 1 to 10 weight % of an amorphous ethylene-butene copolymer having a butene content of 10 to 25 weight % and a Mooney viscosity ML₁₊₄ (100°C) of 5 to 20 and (E) 8 to 15 weight % of talc having an average particle size D₅₀ of 1.0 to 3.0 µm and containing no particle having a particle size of 10 µm or larger. The component (A) contains 0.5 to 10 weight % ethylene and a polypropylene component containing 97 weight % or more of a boiling n-heptane insolubles and 5 to 20 weight % cold p-xylene solubles, and has an intrinsic viscosity (decalin, 135°C) of 2 or more, a melt flow index of 30 to 100 and a bending modulus of 18,000 kgf/cm² or more. The component (B) is a rubbery material reinforced by polyethylene lamellas.

JP-A-6-9852 discloses a resin composition for an automotive bumper, which comprises (A) 45 to 80 weight % of a highly crystalline propylene-ethylene copolymer, (B) 10 to 20 weight % of an amorphous ethylene-propylene copolymer having an ethylene content of 70 to 90 weight % and a Mooney viscosity ML₁₊₄ (100°C) of 5 to 70, (C) 5 to 15 weight % of an ethylene-α-olefin copolymer containing 5 to 15 mol % α-olefin of 4 to 10 carbon atoms and having a density of 0.91 or less and a melt flow index (230°C) of 2.2 to 50 g/10 min, (D) 1 to 10 weight % of an amorphous ethylene-butene copolymer having a butene content of 10 to 25 weight % and a Mooney viscosity ML₁₊₄ (100°C) of 5 to 20 and (E) 8 weight % or less of talc having an average particle size D₅₀ of 1.0 to 3.0 µm and containing no particle having a particle size of 10 µm or larger. The component (A) contains 0.5 to 10 weight % ethylene and a polypropylene component containing 97 weight % or more of a boiling n-heptane insolubles and 5 to 20 weight % cold p-xylene solubles, and has an intrinsic viscosity (decalin, 135°C) of 2 or more, a melt flow index of 30 to 100 and a bending modulus of 18,000 kgf/cm² or more. The component (B) is a rubbery material reinforced by polyethylene lamellas.

In the above resin compositions, the amorphous ethylene-propylene copolymer (EPR) and the amorphous ethylene-butene copolymer (EBR) are blended as elastomer components to the highly crystalline propylene-ethylene block copolymer together with the ethylene-α-olefin copolymer which is so-called as a very-low-density polyethylene. However, the combined use of EPR and EBR is likely to decrease the heat resistance of a shaped article. If the amount of the inorganic filler is increased to improve the heat resistance, the density of a shaped article is unfavorably high and the impact strength of the shaped article is lowered. Although the heat resistance can be enhanced by decreasing the amount of the elastomer component, the impact strength and adhesive strength may be deteriorated. Thus, a polyolefin resin composition which can provide a shaped article being well-balanced in mechanical strength, stiffness, surface hardness, heat resistance, impact strength and adhesive strength has not yet been proposed.

Accordingly, an object of the present invention is to provide a polyolefin composition capable of providing exterior trims such as automotive bumpers having sufficient and well-balanced properties in mechanical strength, stiffness, surface hardness, heat resistance, impact strength and adhesive strength to a coating film.

As a result of the intense research in view of the above objects, the inventors have found that a shaped article excellent and well-balanced in the above properties can be produced from a polyolefin resin obtainable by blending a specific crystalline propylene-ethylene copolymer (Impact Copolymer (ICP)) having an ethylene content of 2 to 30 weight % with a specific ethylene-propylene copolymer rubber, very-low-density polyethylene and talc. The present invention has been accomplished based on the above finding.

Thus, in a first aspect of the present invention, there is provided a polyolefin composition comprising: (a) 50 to 70 parts by weight of a crystalline propylene-ethylene copolymer having an ethylene content of 2 to 30 weight %; (b) 5 to 25 parts by weight of an ethylene-propylene copolymer rubber having a Mooney viscosity ML₁₊₄ of 20 to 70 at 100°C and a propylene content of 22 to 27 weight %; (c) 1 to 25 parts by weight of a very-low-density polyethylene having a density of 0.91 g/cm³ or lower, a melt flow rate of 0.3 to 10 g/10 min determined at 230°C under a load of 2.16 kgf and a melting point of 100°C or higher; and (d) 5 to 25 parts by weight of talc; a total amount of the component (b) and the component (c) being 40 parts by weight or less.

In a second aspect of the present invention, there is provided a shaped article made of the above polyolefin composition.

The present invention will be described below more in detail.

### [1] Components of Polyolefin Composition

The resin composition for producing exterior trims of the present invention contains a crystalline propylene-ethylene copolymer (ICP), an ethylene-propylene copolymer rubber, a very-low-density polyethylene and talc.

### [A] Crystalline Propylene-Ethylene Copolymer (ICP)

### (1) Structure

The crystalline propylene-ethylene copolymer basically comprises (i) 70 to 90 weight % of a propylene homopolymer component and (ii) 10 to 30 weight % of a propylene-ethylene copolymer component. An ethylene homopolymer component may be contained in a small amount. These components may be present separately as respective polymers or may be bonded each other to form another polymer. Although each of the components basically comprises propylene and/or ethylene, the components may contain other monomers such as α-olefin, diene, etc. in a small amount.

The propylene homopolymer component is preferred to be highly stereospecific as specified by an isotactic pentad fraction of 97% or more in view of improving the stiffness of a shape article. The isotactic pentad fraction referred to in the present invention is determined according to ¹³C-NMR spectroscopy described in Macromolecules, 6, 925 (1973). The melt flow rate (MFR), measured at 230°C under a load of 2.16 kgf, of the propylene homopolymer component is 140 to 180 g/10 min, preferably 150 to 160 g/10 min.

In the propylene-ethylene copolymer component, the weight ratio of propylene/ethylene is 25/75 to 75/25, preferably 35/65 to 65/35. When the ratio is smaller than 25/75, the crystalline propylene-ethylene copolymer is poor in ductility and impact strength, and poor in elasticity when exceeds 75/25. The intrinsic viscosity [η] of the propylene-ethylene copolymer component is 2 to 5 dl/g, preferably 3 to 5 dl/g. When the intrinsic viscosity is lower than 2 dl/g, the impact strength cannot be effectively improved. An intrinsic viscosity higher than 5 dl/g brings about molding trouble to give a shaped article a poor appearance due to an increased gel portion.

The content of each component in the crystalline propylene-ethylene copolymer is 70 to 90 weight %, preferably 85 to 90 weight % for the propylene homopolymer component and 10 to 30 weight %, preferably 10 to 15 weight % for the propylene-ethylene copolymer component. The content of the ethylene homopolymer component, if present, is 3 weight % or less. When the content of the propylene homopolymer is lower than 70 weight % or the content of the propylene-ethylene copolymer component is higher than 30 weight %, the stiffness of the crystalline propylene-ethylene copolymer is low. When the content of the propylene homopolymer is higher than 90 weight % or the content of the propylene-ethylene copolymer component is lower than 10 weight %, the impact strength is lowered.

The MFR of the crystalline propylene-ethylene copolymer is preferably 70 to 100 g/10 min, more preferably 75 to 85 g/10 min.

### (2) Production Method

The crystalline propylene-ethylene copolymer may be produced by mechanically blending or reactor blending the propylene homopolymer component and the propylene-ethylene copolymer component which are separately produced, and more preferably, produced by block-copolymerizing ethylene and propylene by a multi-stage copolymerization method. The detailed reaction conditions are not specifically limited.

In the multi-stage copolymerization method, propylene is first polymerized over a Ziegler catalyst, etc. to prepare the propylene homopolymer component which may contain a small amount of a comonomer component. In the next stage, a mixed gas of ethylene and propylene is subjected to block copolymerization to form the propylene-ethylene copolymer component. To attain an isotactic pentad fraction of 97% or more of the propylene homopolymer component, propylene is preferred to be polymerized over a stereospecific catalyst disclosed in JP-A-6-271616, JP-A-6-298830, JP-A-7-62047 and JP-A-7-70266.

### [B] Ethylene-Propylene Copolymer Rubber

The ethylene-propylene copolymer rubber (EPR) used in the present invention is an amorphous copolymer of ethylene and propylene, and has a propylene content of 22 to 27 weight %. When the propylene content is lower than 22 weight %, the impact strength of a shaped article is poor, and a propylene content more than 27 weight % reduces the surface hardness of a shaped article. The Mooney viscosity ML₁₊₄ measured at 100°C is 20 to 70. When lower than 20, the impact strength of a shaped article is low, and the fluidity of the polyolefin composition is insufficient when larger than 70. The ethylene-propylene copolymer rubber used in the present invention is further specified by the melting point of 18 to 40°C, and a melt flow rate of 0.8 to 3.1 g/10 min. The ethylene-propylene copolymer rubber may be produced by a known method.

### [C] Very-Low-Density Polyethylene

The very-low-density polyethylene is a copolymer of ethylene and α-olefin having 4 to 10 carbon atoms, preferably 4 to 8 carbon atoms, and more preferably 4 carbon atoms. The α-olefin may be 1-propene, 1-butene, 1-pentene, 1-hexene, etc. The α-olefin content in the very-low-density polyethylene is 10 to 20 weight %, preferably 12 to 18 weight %. When the content is less than 10 weight %, a shaped article has a poor impact strength, and has a reduced bending modulus when more than 20 weight %.

The very-low-density polyethylene has a density of 0.91 g/cm³ or less, preferably 0.90 to 0.91 g/cm³, and a melt flow rate, measured at 230°C under a load of 2.16 kgf, of 0.3 to 10 g/10 min, preferably 1 to 5 g/10 min. When the melt flow rate is smaller than 0.3 g/10 min, the polyolefin composition has a poor fluidity, and the impact strength of a shaped article is deteriorated when larger than 10 g/10 min. Also, the melting point of the very-low-density polyethylene is preferably 100 to 130°C, more preferably 115 to 125°C. The production method of the very-low-density polyethylene is not specifically limited and a method known in the art may be used.

### [D] Talc

The tale used in the present invention is preferred to have an average particle size of 1 to 7 µm, preferably 2 to 5 µm. A talc having an average particle size larger than 7 µm has little effect on improving the mechanical properties of a shaped article and results in a poor impact strength.

To more sufficiently improve the mechanical properties, heat resistance and weatherability of a shaped article, the talc may be surface-treated by a surface-treating agent such as a silicone and modified silicone. The silicone may be an organopolysiloxane such as polydimethylsiloxane, and the modified silicone may be an adduct of organopolysiloxane, etc. with a silazane compound such as silazane, disilazane, trisilazane, hexacyclosilazane, etc. The surface treatment may be carried out in a Henschel mixer, etc. by mechanically mixing 100 parts by weight of the talc and 0.1 to 5, preferably 0.2 to 1 part by weight of the surface-treating agent.

### [2] Blending Amount

The blending amount of each components is (a) 50 to 70, preferably 60 to 70 parts by weight for the crystalline propylene-ethylene copolymer, (b) 5 to 25, preferably 10 to 20 parts by weight for the ethylene-propylene copolymer rubber, (c) 1 to 25, preferably 5 to 20 parts by weight for the very-low-density polyethylene, and (d) 5 to 25, preferably 5 to 15 parts by weight for the talc.

When the blending amount of the crystalline propylene-ethylene copolymer is less than 50 parts by weight, a shaped article has poor mechanical strength, impact strength, etc., and the impact strength and adhesive strength are reduced when more than 70 parts by weight.

When the blending amount of the ethylene-propylene copolymer rubber is less than 5 parts by weight, a shaped article has a poor impact strength, and the mechanical strength, surface hardness, stiffness, etc. are reduced when more than 25 parts by weight.

When the blending amount of the very-low-density polyethylene is less than 1 part by weight, a shaped article has a poor surface hardness and an insufficient heat resistance, and the impact strength and stiffness are not well-balanced when more than 25 parts by weight.

The sum of the ethylene-propylene copolymer rubber and the very-low-density polyethylene ((b) + (c)) is necessary to be 40 parts by weight or less, preferably 15 to 35 parts by weight. When the sum is more than 40 parts by weight, the stiffness and heat resistance of a shaped article are poor.

A talc blended in an amount less than 5 parts by weight has little effect on improving the stiffness and heat resistance of a shaped article, and the fluidity of the polyolefin composition and the impact strength of a shaped article are reduced when blended in an amount more than 25 parts by weight.

### [3] Additives

The polyolefin composition of the present invention may contain additives, if desired, such as a heat stabilizer, an antioxidant, a light stabilizer, a flame retardant, a plasticizer, an antistatic agent, a release agent, a foaming agent, a colorant, a pigment, etc. in an amount up to 3 parts by weight.

### [4] Production Method of Composition

The above components may be blended by a known method without specifically limiting the conditions to obtain the polyolefin composition of the present invention in the form of powder, granules, pellet, etc. For example, blending may be carried out at an elevated temperature of 190 to 240°C usually by using a mixer or kneader, such as a heat roll mixer, a super mixer, a single screw extruder, a twin-screw extruder, Bumbury mixer, etc. The thus produced polyolefin composition of the present invention has a melt flow rate of 18 to 30 g/10 min, preferably 22 to 27 g/10 min.

### [5] Molding Method of Composition

The polyolefin composition of the present invention may be molded to a shaped article by a known molding method such as an injection molding under conditions known in the art. For example, the polyolefin composition may be injection-molded to a shaped article under conditions of a resin temperature of 180 to 240°C and a mold temperature of 20 to 80°C. The shaped article molded from the polyolefin composition of the present invention may have a bending modulus of 12000 to 14500 MPa, an embrittle temperature of -40 to - 25°C, an Izod impact strength of 4 to 8 kgf·cm/cm, a heat distortion temperature of 110 to 130°C. Also, the shaped article may have a good adhesive strength to coating film formed thereon as evidenced by the results of the cross-cut test which will be described below.

The present invention will be further described while referring to the following Examples which should be considered to illustrate various preferred embodiments of the present invention.

### EXAMPLES 1 TO 6 AND COMPARATIVE EXAMPLES 1 TO 8

### (1) Synthesis of Crystalline Propylene-Ethylene Copolymer

A pre-activated metal magnesium was allowed to successively react with n-butylmagnesium chloride and n-butyl chloride in n-butyl ether as the solvent. Then HC(OC₂H₅)₃ was added dropwise to the reaction mixture. The solid substance was washed and dried to obtain a solid product containing magnesium and chlorine. A suspension of the solid product in n-heptane was reacted with 2,2,2-trichloroethanol at 80°C for one hour in nitrogen atmosphere. The solid product thus treated was collected by filtration, washed with successive several portions of n-hexane and toluene, and reacted with titanium tetrachloride and subsequently with di-n-butyl phthalate. After collection by filtration and washing, the solid product was further reacted with titanium tetrachloride and washed with n-hexane to prepare the catalyst component (A).

The catalyst component (A) was introduced into n-heptane as the solvent and cooled to 5°C in nitrogen gas atmosphere, then triethylaluminum (TEAL) and 2,3,4-trimethyl-3-azacyclopentyltrimethoxysilane was added thereto. After evacuating the reaction system, propylene gas was continuously introduced and polymerized for 2.2 hours. After polymerization was completed, propylene gas was purged from the system by nitrogen gas, and the solid was washed, dried under reduced pressure to obtain a prepolymerization catalyst.

In an autoclave, n-heptane solvent, TEAL and t-butoxycyclopentyldimethoxysilane, and then the prepolymerization catalyst were introduced in nitrogen gas atmosphere. After introducing 18 liters of hydrogen gas as a molecular weight modifier and 3.0 liters of a liquid propylene, polymerization was conducted at 70°C for one hour.

After introducing 0.2 liter of hydrogen gas into the autoclave, a mixed gas of propylene and ethylene (1.03 by molar ratio) was supplied to carry out the copolymerization of propylene and ethylene for 1.5 hours under an internal pressure of 6.0 kgf/cm² (gauge pressure) to obtain a white powdery crystalline propylene-ethylene copolymer.

The results of analysis showed that the crystalline propylene-ethylene (ICP) thus produced consisted of 87.0 weight % of the propylene homopolymer component and 13.0 weight % of the propylene-ethylene copolymer component. The isotactic pentad fraction of the propylene homopolymer component measured by ¹³C-NMR was 97.5%. The melt flow rate of the propylene homopolymer component measured at 230°C under a load of 2.16 kgf was 150 g/10 min. The weight ratio of propylene/ethylene and the intrinsic viscosity [η] measured at 135°C in decalin of the propylene-ethylene copolymer component were 60/40 and 3 dl/g, respectively. The melt flow rate of the crystalline propylene-ethylene copolymer (ICP) was 80 g/10 min.

### (2) Production of Polyolefin Composition and Test Pieces

The components listed below were used.

### (a) Crystalline Propylene-Ethylene Copolymer

- ICP:: Prepared above.
MFR: 80 g/10 min.

### (b) Elastomer

- EPR1:: Ethylene-Propylene Copolymer Rubber
EP961SP manufactured by Japan Synthetic Rubber Co., Ltd.
Propylene Content: 23 weight %.
Mooney Viscosity ML₁₊₄ (100°C): 63.
Melting Point: 40°C.
MFR: 0.8 g/10 min.
- EPR2:: Ethylene-Propylene Copolymer Rubber
EP02P manufactured by Japan Synthetic Rubber Co., Ltd.
Propylene Content: 26 weight %.
Mooney Viscosity ML₁₊₄ (100°C): 25.
Melting Point: 18°C.
MFR: 3.1 g/10 min.
- EBR:: Ethylene-Butene Copolymer Rubber
EBM2021P manufactured by Japan Synthetic Rubber Co., Ltd.
Butene Content: 20 weight %.
Melting Point: 68°C.
MFR: 1.3 g/10 min.

### (c) Low-Density Polyethylene

- VLDPE1:: Very-Low-Density Polyethylene
NUC-FLX, Grade of DEFD9042 manufactured by Nippon
Unicar Company, Ltd.
Butene Content: 14 weight %.
Density: 0.90 g/cm³.
Melting Point: 119°C.
MFR: 5 g/10 min.
- VLDPE2:: Very-Low-Density Polyethylene
NUC-FLX, Grade of ETS9063 manufactured by Nippon Unicar Company, Ltd.
Hexene Content: 14 weight %.
Density: 0.91 g/cm³.
Melting Point: 124°C.
MFR: 0.5 g/10 min.
- LDPE:: Low-Density Polyethylene
DND-2450 manufactured by Nippon Unicar Company, Ltd.
Density: 0.920 g/cm³.
MI: 1.3 g/10 min (190°C, 2.16 kg).
- LLDPE:: Linear Low-Density Polyethylene
(G-5210 manufactured by Nippon Unicar Company, Ltd.
Density: 0.920 g/cm³.
MI: 1.0 g/10 min (190°C, 2.16 kg).

### (d) Talc

CIMPACT600 manufactured by Cyprus Co., Ltd.
Average Particle Size: 5.9 µm.

The respective amounts of the above components, as shown in Table 1, were dry-blended in a super mixer, and melt-kneaded in a twin-screw extruder (PCM-45 manufactured by Ikegai K.K.) at 200°C and 200 rpm to obtain each polyolefin composition in the form of pellets. Each polyolefin composition was injection-molded under the conditions of a resin temperature of 210°C, an injection pressure of 900 kgf/cm², and a mold temperature of 60°C to prepare test pieces.

### (3) Measurement of Properties

The MFR of the polyolefin composition and the following properties of the test pieces were measured as follows.
(1) MFR (g/10 min): Measured according to JIS K7203 at 230°C under a load of 2.16 kgf.
(2) Bending Modulus (kgf/cm²): Measured according to ASTM D790.
(3) Embrittle Temperature (°C): Measured according to ASTM D746.
(4) Izod Impact Strength (kgf·cm/cm): Measured at -30°C according to ASTM D256.
(5) Heat Distortion Temperature (°C): Measured according to ASTM D648.
(6) Adhesive Strength: After cleaning the surface of the test piece (150 mm x 70 mm x 3 mm) with a gauze impregnated with isopropyl alcohol, a primer layer of 15 µm thick was formed thereon. Then, an acrylic melamine paint was coated on the primer layer, which was baked at 120°C for 30 minute to form a topcoat layer of 40 µm thick.

The adhesive strength between the surface of the test piece and the topcoat layer was evaluated by a cross-cut test (Scotch tape test). The surface of the topcoat layer was longitudinally and transversely scratched by a cutter to form cross hatching lines so as to provide 100 squares (1 mm x 1 mm). An adhesive tape was applied on the cut area and abruptly peeled off at an angle of about 180°. The number of squares remaining on the topcoat layer was counted.

**Table 1**

| Parts by weight | | Examples | | | | | |
|---|---|---|---|---|---|---|---|
| | | 1 | 2 | 3 | 4 | 5 | 6 |
| COMPOSITION | | | | | | | |
| (a): | ICP | 62 | 61 | 61 | 61 | 61 | 61 |
| (b): | EPR1 | 13 | 14 | 18 | - | 14 | 9 |
| | EPR2 | - | - | - | 14 | - | 9 |
| | EBR | - | - | - | - | - | - |
| (c): | VLDPE1 | 13 | 13 | 9 | 13 | - | 9 |
| | VLDPE2 | - | - | - | - | 13 | - |
| | LDPE | - | - | - | - | - | - |
| | LLDPE | - | - | - | - | - | - |
| (d): | Talc | 12 | 12 | 12 | 12 | 12 | 12 |

| PROPERTIES | | | | | | | |
|---|---|---|---|---|---|---|---|
| MFR (g/10 min) | | 25 | 25 | 22 | 27 | 26 | 25 |
| Bending modulus (MPa) | | 13,700 | 13,500 | 13,200 | 13,300 | 13,600 | 13,500 |
| Embrittle temperature (°C) | | -30 | -32 | -34 | -30 | -30 | -30 |
| Izod impact strength (kgf·cm/cm) | | 6.0 | 6.5 | 7.0 | 6.0 | 6.0 | 6.0 |
| Heat distortion temperature (°C) | | 127 | 123 | 120 | 123 | 124 | 120 |
| Adhesive strength | | 100/100 | 100/100 | 100/100 | 100/100 | 100/100 | 100/100 |

**Table 2**

| Parts by weight | | Comparative Examples | | | | | | | |
|---|---|---|---|---|---|---|---|---|---|
| | | 1 | 2 | 3 | 4 | 5 | 6 | 7 | 8 |
| COMPOSITION | | | | | | | | | |
| (a): | ICP | 62 | 59 | 66 | 62 | 59 | 62 | 62 | 62 |
| (b): | EPR1 | 13 | 13 | 11 | 13 | 13 | 13 | 13 | 13 |
| | EPR2 | - | - | - | 13 | - | - | - | - |
| | EBR | 13 | 13 | 11 | - | 16 | 6.5 | - | - |
| (c): | VLDPE1 | - | - | - | - | - | 6.5 | - | - |
| | VLDPE2 | - | - | - | - | - | - | - | - |
| | LDPE | - | - | - | - | - | - | 13 | - |
| | LLDPE | - | - | - | - | - | - | - | 13 |
| (d): | Talc | 12 | 15 | 12 | 12 | 12 | 12 | 12 | 12 |

| PROPERTIES | | | | | | | | | |
|---|---|---|---|---|---|---|---|---|---|
| MFR (g/10 min) | | 25 | 25 | 27 | 24 | 25 | 25 | 22 | 22 |
| Bending modulus (MPa) | | 13,700 | 14,300 | 14,800 | 13,000 | 13,500 | 13,500 | 14,000 | 14,300 |
| Embrittle temperature (°C) | | -30 | -25 | -22 | -32 | -32 | -30 | -29 | -32 |
| Izod impact strength (kgf·cm/cm) | | 6.0 | 4.5 | 3.8 | 6.0 | 6.0 | 6.0 | 6.0 | 6.0 |
| Heat distortion temperature (°C) | | 115 | 120 | 120 | 105 | 115 | 117 | 110 | 120 |
| Adhesive strength | | 100/100 | 99/100 | 81/100 | 100/100 | 100/100 | 100/100 | 50/100 | 55/100 |

As seen from the above results, the polyolefin composition of Examples 1 to 6 produced the shaped articles which were well-balanced in the bending modulus, heat resistance and impact strength, and also excellent in the adhesive strength to the coating film.

As described above, the polyolefin composition of the present invention, which comprises a crystalline propylene-ethylene copolymer, an ethylene-propylene copolymer rubber, a very-low-density polyethylene and talc, can provide shaped articles having good mechanical properties and heat resistance which are well-balanced, and a good adhesive strength to a coating film. Therefore, the polyolefin composition of the present invention may be widely applicable not only to an automotive bumper but also to various exterior trims.

## Claims

1. A polyolefin composition comprising:
(a) 50 to 70 parts by weight of a crystalline propylene-ethylene copolymer having an ethylene content of 2 to 30 weight %;
(b) 5 to 25 parts by weight of an ethylene-propylene copolymer rubber having a Mooney viscosity ML₁₊₄ of 20 to 70 at 100°C and a propylene content of 22 to 27 weight %;
(c) 1 to 25 parts by weight of a very-low-density polyethylene having a density of 0.91 g/cm³ or lower, a melt flow rate of 0.3 to 10 g/10 min determined at 230°C under a load of 2.16 kgf and a melting point of 100°C or higher; and
(d) 5 to 25 parts by weight of talc; a total amount of said component (b) and said component (c) being 40 parts by weight or less.

2. The polyolefin composition according to claim 1, wherein said crystalline propylene-ethylene copolymer contains:
(1) 70 to 90 weight % of a propylene homopolymer component having an isotactic pentad fraction of 97% or more measured by ¹³C-NMR; and
(2) 10 to 30 weight % of a propylene-ethylene copolymer component having a propylene/ethylene weight ratio of 25/75 to 75/25.

3. A shaped article for use in exterior trims, which is molded from a polyolefin composition as defined in claim 1 or 2.

4. A method of manufacturing a shaped article for use in exterior trims which comprises blending together components (a), (b), (c) and (d) as defined in claim 1 to produce a polyolefin composition; and molding said polyolefin composition into a shaped article.
